# EUROPEAN PATENT SPECIFICATION

(11) **EP 3 632 606 B1**
(45) Date of publication and mention of the grant of the patent: **08.03.2023**
(21) Application number: 18805354.0
(22) Date of filing: 25.05.2018
(51) Int. Cl.: B23K 101/36, B23K 103/10, B32B 15/01, B60L 50/64, B23K 1/008, B23K 1/20, B23K 3/04, B23K 35/36, B23K 35/365, B23K 35/362, B23K 35/02, H01M 10/63, H01M 10/625, B60L 58/26, H01M 10/613

(54) **METHOD FOR MANUFACTURING ELECTRIC CAR BATTERY COOLING DEVICE**
VERFAHREN ZUR HERSTELLUNG EINER KÜHLVORRICHTUNG FÜR EINE ELEKTRISCHE AUTOBATTERIE
PROCÉDÉ DE FABRICATION DE DISPOSITIF DE REFROIDISSEMENT DE BATTERIE DE VOITURE ÉLECTRIQUE

(30) Priority: 26.05.2017 KR 20170065199
(43) Date of publication of application: 08.04.2020
(73) Proprietor: Heesung Precision Co., Ltd., Changwon-si, Gyeongsangnam-do 51553 (KR)
(72) Inventor: PARK, Yong Seok, Changwon-si Gyeongsangnam-do 51540 (KR); LEE, Dong Hyeok, Changwon-si Gyeongsangnam-do 51540 (KR)
(74) Representative: Jacobi, Markus Alexander
(86) International application number: PCT/KR2018/005933
(87) International publication number: WO 2018/217051

(56) References cited:
- JP-A- H07 185 884
- JP-A- H07 185 884
- JP-A- 2001 226 540
- JP-A- 2015 005 784
- KR-A- 20000 034 124
- KR-A- 20130 034 019
- KR-A- 20150 081 514
- KR-A- 20150 081 514
- US-A1- 2013 037 172
- Wikipedia: "Brazing", , 20 May 2017 (2017-05-20), XP055769624, Internet Retrieved from the Internet: URL:https://en.wikipedia.org/wiki/Brazing [retrieved on 2021-01-28]

## Description

### [TECHNICAL FIELD]

The present invention relates to a method for manufacturing a device for cooling an electric car battery and, more particularly, to a method for manufacturing an electric car battery cooling device, wherein a flux is applied to an upper case and a lower case, which constitute a cooling device, and the cases are then heated/bonded to each other, and, particularly, the cases are bonded to each other after applying the flux two times such that no leak occurs through the bonded part, thereby making it possible to secure an excellent bonding performance.

### [BACKGROUND ART]

In general, a rechargeable battery is provided to supply power to an electric car, and the car is operated by a current supplied from the battery.

Such a battery may generate heat in use due to resistance or generate heat during charging, and there is a problem in that the efficiency of the battery decreases due to the heat.

In order to solve the above problem, various cooling devices have been developed.

As disclosed by the patent document KR 2015 0081514 A and as shown in FIGS. 1 and 2, a conventional cooling device includes an upper case 110 and a lower case 120 formed of a clad plate. A fluid exchanges heat while flowing in an accommodation space 150 formed between the upper case 110 and the lower case 120. The fluid may be introduced into or discharged from the accommodation space formed between the upper case 110 and the lower case 120 through a port 300. As shown in the drawings, the port 300 may be installed in the upper case 110 and may include an input port 310 and an output port 320. The port 300 is inserted through a port hole 116 formed in the upper case 110, the port hole 116 is formed in a port portion 114 of the upper case 110. The port portion 114 protrudes in the longitudinal direction from the upper case 110. An edge portion 121 of the lower case 120 is bonded to the upper case 110 and an inner surface is concaved to form the accommodation space 150. A compartment 140 protrudes upward in the longitudinal direction of the lower case 120 within the accommodation space 150. The accommodation space 150 is partitioned to both sides by the partition 140.

Fasteners 112 and 134 are provided in the upper case 110 and the lower case 120, respectively.

In order to bond the upper case 110 and the lower case 120, a flux is applied to surfaces facing each other and then bonded. The reason for using the flux is that the bonding is rarely achieved due to an oxide layer formed on the surface of the upper case 110 or the lower case 120. In order to remove the oxide layer, the flux is applied to the surface of the upper case 110 or the lower case 120 and the oxide layer formed on the surface can be removed while the flux is melted.

When the upper case and the lower case are bonded by the conventional technology, there is a problem in that leakage occurs at the bonded portion so that the fluid for cooling is leaked. This is because uncoated portions or pores are generated in the applied flux layer, so that the structure is not dense, thereby resulting in poor bonding.

Meanwhile, the above-described cooling device is generally known in the art and described in detail in the related documents, so the detailed description and illustration thereof will be omitted.

### [DETAILED DESCRIPTION OF THE INVENTION]

### [TECHNICAL PROBLEM]

Therefore, the present invention is suggested to solve the above-mentioned problems, and an object of the present invention is to provide a method for manufacturing an electric car battery cooling device, wherein a flux is applied to an upper case and a lower case, which constitute a cooling device, and the cases are then heated/bonded to each other, in which the cases are bonded to each other after applying the flux two times to compensate for uncoated portions or pores generated by the applied flux, thereby forming a more dense structure such that no leak occurs and an excellent bonding performance is ensured.

### [TECHNICAL SOLUTION]

In order to accomplish the above object, the present invention provides a method for manufacturing an electric car battery cooling device including an upper case and a lower case formed of a clad plate, in which the upper case includes an upper case body formed of aluminum and an upper adhesive layer laminated on the upper case body, the lower case is coupled to the upper case and includes a lower case body formed of aluminum and a lower adhesive layer laminated on the lower case body, and an accommodation space is formed between the upper case and the lower case, wherein the method includes a base material preparation step of preparing the upper case and the lower case, which are formed of the clad plate; a flux application step of applying a flux on bonding surfaces of the upper case and the lower case such that the flux is laminated on the upper adhesive layer and the lower adhesive layer; and a thermal bonding step of stacking and heating the upper case and the lower case such that applied flux layers are in contact with each other, wherein the flux includes a fluoride-based aluminum flux, which is mixed with water, and is prepared by mixing 15% by weight to 40% by weight of an aluminum flux with 60% by weight to 85% by weight of water.

A lamination thickness of the flux formed on the upper case and the lower case may be in the range of 30 µm ~ 50 µm.

The flux application step includes a first application step of applying the flux to the upper and lower adhesive layers of the upper and lower cases, respectively, and a second application step of applying the flux on the applied flux layers.

The method further includes a flux drying step of drying the flux layers, which are applied in the first application step, between the first and second application steps.

A thickness of the flux applied on the upper case and the lower case in the first and second application steps may be in the range of 15 µm ~ 25 µm.

The flux may include a fluoride-based aluminum flux, which is mixed with a binder and water, and may be prepared by mixing 15% by weight to 40% by weight of an aluminum flux, 0 to 5% by weight of a binder, and 55% by weight to 85% by weight of water.

The thermal bonding step may include a primary heating step of heating the upper case and the lower case to which the flux is applied, respectively, and a bonding heating step of stacking and heating the upper case and the lower case such that the flux layers of the upper case and the lower case, which are primarily heated, are in contact with each other.

### [ADVANTAGEOUS EFFECTS OF THE INVENTION]

According to the present invention described above, it is possible to compensate for uncoated portions or pores generated by an applied flux, so that a more dense bonding structure can be provided, thereby preventing a leak and ensuring an excellent bonding performance.

### [DESCRIPTION OF THE DRAWINGS]

FIG. 1 is a perspective view showing a conventional battery cooling device.
FIG. 2 is an exploded perspective view showing an upper case and a lower case of a conventional battery cooling device.
FIG. 3 is a schematic view showing an upper case and a lower case which are stacked in accordance with a manufacturing method according to one embodiment of the present invention.
FIG. 4 is a flowchart showing a manufacturing method according to one embodiment of the present invention.
FIG. 5 is a flowchart showing a flux application step in a manufacturing method according to one embodiment of the present invention.
FIG. 6 is a flowchart showing a heat bonding step in a manufacturing method according to one embodiment of the present invention.

### [BEST MODE]

### [MODE FOR INVENTION]

Hereinafter, exemplary embodiments of the present invention will be described with reference to the accompanying drawings. In the following description, the thickness of the lines or the size of the components shown in the drawings may be exaggerated for the purpose of clarity and convenience of description.

In addition, terms to be described below are defined in consideration of functions in the present invention, and the terms may vary according to the intention or convention of a user or an operator. Therefore, the definitions of these terms should be made based on the contents throughout the specification.

Hereinafter, the present invention will be described in detail with reference to the accompanying drawings and embodiments.

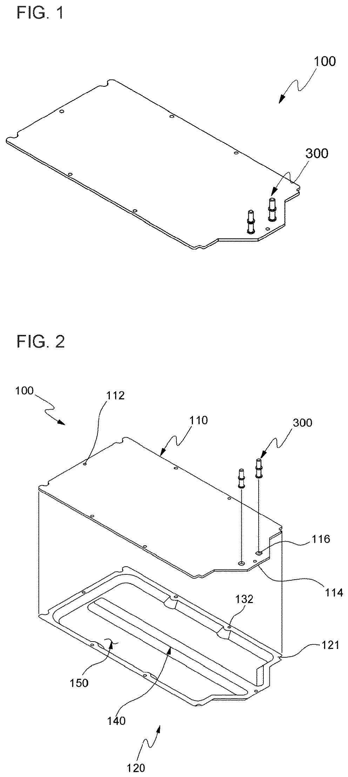

As shown in FIGS. 1 and 2, a cooling device 10 which is subject to a manufacturing method of the present invention may include an upper case 110 and a lower case 120 formed of a clad plate. The upper case 110 may include an upper case body 110a formed of aluminum and an upper adhesive layer 110b laminated on the upper case body 110a. The lower case 120 may be coupled to the upper case 110 and include a lower case body 120a formed of aluminum and a lower adhesive layer 120b laminated on the lower case body 120a. In this case, an accommodation space 150 may be formed between the upper case 110 and the lower case 120.

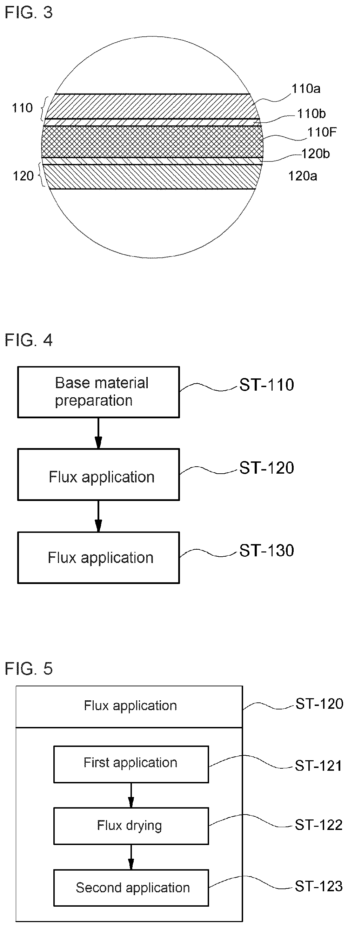

As shown in FIGS. 3 to 6, the present invention for manufacturing the cooling device 10 having the above configuration may include a base material preparation step (ST-110) of preparing the upper case 110 and the lower case 120 formed of a clad plate material. Then, a flux application step (ST-120) may be performed by spraying the flux on the bonding surfaces of the upper case 110 and the lower case 120 such that the flux may be laminated on the upper adhesive layer 110b and the lower adhesive layer 120b. Thereafter, a thermal bonding step (ST-130) may be performed to stack and heat the upper case 110 and the lower case 120 such that the applied flux layers are in contact with each other.

As shown in FIG. 3, the upper case 110 and the lower case 120 may be stacked in the vertical direction, the upper adhesive layer 110b and the lower adhesive layer 120b may be disposed on bonding surfaces of the upper case 110 and the lower case 120, that is, the surfaces facing each other, and the flux 100F may be applied therebetween. Then, the upper case 110 and the lower case 120 may be bonded to each other by heating the upper case 110 and the lower case 120.

The flux 100F may include a fluoride-based aluminum flux mixed with water, and may be prepared by mixing 15% by weight to 40% by weight of an aluminum flux with 60% by weight to 85% by weight of water. The lamination thickness of the flux 100F formed on the upper case 110 and the lower case 120 may be in the range of 30 µm to 50 µm. When the lamination thickness of the flux 100F is less than 30 µm, the bonding force is weak due to the lack of the flux 100F. When the lamination thickness of the flux 100F exceeds 50 µm, carbonization may occur due to the amount of internal binder, so that a leak may be generated, thereby lowing the bonding force. In particular, it is most preferable when the thickness of the flux 100F is 20 µm.

As shown in FIG. 5, the flux application step (ST-120) is performed in two steps. In detail, the flux application step may include a first application step (ST-121) of applying the flux to the upper adhesive layer 110b and the lower adhesive layer 120b of the upper case 110 and the lower case 120, respectively, and a second application step (ST-123) for applying the flux to the applied flux layer again. The reason for performing the flux application step (ST-120) through the two steps is that uncoated portions or pores may be generated in the applied flux and the bonding force may be lowered when the flux is applied only one time. Therefore, when the flux is applied two times according to the present invention, even if the uncoated portions or pores are generated in the flux applied in the first application step, the flux applied in the second application step may penetrate into the uncoated portions or the pores, so that the applied flux may have a dense structure, thereby improving the bonding force.

Tests were conducted to confirm the above, and the results are shown in Table 1 below.

**[Table 1]**

| Number of times for flux applications | Quantity of test samples | Quantity of defects | Applied pressure |
|---|---|---|---|
| One time | 5ea | 2ea | 2.1 Bar |
| Two times | 5ea | 0ea | 2.1 Bar |
| Three times | 5ea | 2ea | 2.1 Bar |
| Five times | 5ea | 5ea | 2.1 Bar |

As shown in Table 1, the number of times for flux applications was once, twice, three times, and five times, the quantity of the samples subject to the test was five and pressure of 2.1 Bar was applied. After the test, it was determined as a defect when a leak occurred, and it was determined as a normal when there was no leak. As can be seen from Table 1, in the case of one-time flux application, as described above, uncoated portions or pores were generated and leaks occurred in two samples, so the two samples were determined as defects. In the case of two-time flux applications, the flux penetrated into the uncoated portions or the pores, so that the tissue was become dense, and thus all the samples were determined as a normal, and the bonding force was most preferable. In the case of three-time flux applications, the binder was rather excessive so that the leak occurred and two samples were determined as defects. In the case of five-time applications, the binder was too excessively so that more leaks occurred and all the five samples were determined as defects.

As shown in FIG. 5, the flux drying step (ST-122) of drying the flux layer applied in the first application step (ST-121) is further performed between the first application step (ST-121) and the second application step (ST-123). In other words, the flux layer, which is primarily applied, is dried first, and then the flux is applied secondarily. When the flux drying step (ST-122) is performed, a greater amount of fluxes may penetrate into the uncoated portions or pores generated in the flux layer, which is previously applied, thereby forming the flux layer having a more dense structure. The flux drying step (ST-122) may be performed for about 5 minutes in the temperature range of 100°C ~ 120°C.

The thickness of the flux applied onto the upper case 110 and the lower case 120 in the first application step (ST-121) and the second application step (ST-123) may be in the range of 15 µm to 25 µm. That is, as described above, the lamination thicknesses of the flux 100F formed on the upper case 110 and the lower case 120 may be in the range of 30 µm to 50 µm, respectively. Since the flux is applied two times in the present invention, the thickness may be halved in the range of 15 µm to 25 µm.

The flux may include a fluoride-based aluminum flux, which is mixed with a binder and water, and may be prepared by mixing 15% by weight to 40% by weight of an aluminum flux, 0 to 5% by weight of a binder, and 55% by weight to 85% by weight of water. In this case, the binder may serve to prevent the flux to be applied from being separated and may include a butylester-based resin. The binder may be carbonized during the thermal bonding, so the welding failure may occur when the amount of the binder is excessive.

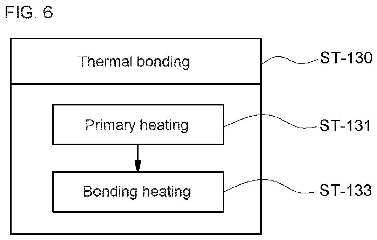

As shown in FIG. 6, the thermal bonding step (ST-130) may include a primary heating step (ST-131) for heating the upper case 110 and the lower case 120 to which the flux is applied, respectively, and a bonding heating step (ST-133) for stacking and heating the upper case 110 and the lower case 120 such that the flux layers of the upper case 110 and the lower case 120, which have been subject to the primary heating, are in contact with each other. The primary heating step (ST-131) may be performed for 5 minutes or more at the temperature range of 150°C ~ 200°C and the binder may be melted in the primary heating step (ST-131). The second heating step (ST-133) may be performed at the temperature of 600°C.

The description given with the range in the present invention is meant to include an upper limit and a lower limit.

### [INDUSTRIAL APPLICABILITY]

As described above, the uncoated portions or pores generated in the flux applied according to the method for manufacturing an electric car battery cooling device of the present invention can be compensated, so that a more dense bonding structure can be formed, thereby preventing the leak and securing the excellent bonding performance.

## Claims

1. A method for manufacturing an electric car battery cooling device (100) including an upper case (110) and a lower case (120) formed of a clad plate, in which the upper case (110) includes an upper case body (110a) formed of aluminum and an upper adhesive layer (110b) laminated on the upper case body (110a), the lower case (120) is coupled to the upper case (110) and includes a lower case body (120a) formed of aluminum and a lower adhesive layer (120b) laminated on the lower case body (120a), and an accommodation space (150) is formed between the upper case (110) and the lower case (120), the method comprising:
a base material preparation step (ST-110) of preparing the upper case (110) and the lower case (120), which are formed of the clad plate
**characterized by**
a flux application step (ST-120) of applying a flux on bonding surfaces of the upper case (110) and the lower case (120) such that the flux is laminated on the upper adhesive layer (110b) and the lower adhesive layer (120b); and
a thermal bonding step (ST-130) of stacking and heating the upper case (110) and the lower case (120) such that applied flux layers are in contact with each other
wherein the flux includes a fluoride-based aluminum flux, which is mixed with water, and is prepared by mixing 15% by weight to 40% by weight of an aluminum flux with 60% by weight to 85% by weight of water,
wherein the flux application step (ST-120) includes a first application step (ST-121) of applying the flux to the upper adhesive layer (110b) of the upper case (110) and the lower adhesive layer (120b) of the lower case (120), and a second application step (ST123) for applying the flux to the applied flux layer again, and
wherein the method further comprises a flux drying step (ST-122) of drying the flux layer applied in the first application step (ST-121), which is performed between the first application step (ST-121) and the second application step (ST-123) such that a greater amount of fluxes penetrates into uncoated portions or pores generated in the flux layer which is previously applied, thereby forming the flux layer having a more dense structure.

2. The method of claim 1, wherein a lamination thickness of the flux formed on the upper case (110) and the lower case (120) is in a range of 30 µm ~ 50 µm

3. The method of claim 1 or 2, wherein the flux drying step (ST-122) is performed for about 5 minutes in the temperature range of 100°C ~ 120°C.

4. The method of any one of claim 1 to 3, wherein the flux includes a fluoride-based aluminum flux, which is mixed with a binder and water, and is prepared by mixing 15% by weight to 40% by weight of an aluminum flux, 0 to 5% by weight of a binder, and 60% by weight to 85% by weight of water.

5. The method of any one of claims 1 to 4, wherein the thermal bonding step (ST-130) includes a primary heating step (ST-131) of heating the upper case (110) and the lower case (120) to which the flux is applied, respectively, and a bonding heating step (ST-133) of stacking and heating the upper case (110) and the lower case (120) such that the flux layers of the upper case (110) and the lower case (120), which are primarily heated, are in contact with each other.

6. The method of claim 5, wherein the primary heating step (ST-131) is performed for 5 minutes or more at the temperature range of 150°C ~ 200°C and the binder is melted in the primary heating step (ST-131).

7. The method of claim 5 or 6, wherein the bonding heating step (ST-133) is performed at the temperature of 600 °C.

## Patentansprüche

1. Verfahren zur Herstellung einer Kühlvorrichtung (100) für eine elektrische Fahrzeugbatterie, die ein oberes Gehäuse (110) und ein unteres Gehäuse (120) umfasst, das aus einer Verkleidungs-Platte gebildet ist, wobei das obere Gehäuse (110) einen oberen Gehäusekörper (110a), der aus Aluminium gebildet ist, und eine obere Klebeschicht (110b), die auf den oberen Gehäusekörper (110a) laminiert ist, umfasst, das untere Gehäuse (120) mit dem oberen Gehäuse (110) gekoppelt ist und einen unteren Gehäusekörper (120a), der aus Aluminium gebildet ist, und eine untere Klebeschicht (120b), die auf den unteren Gehäusekörper (120a) laminiert ist, aufweist, und ein Aufnahmeraum (150) zwischen dem oberen Gehäuse (110) und dem unteren Gehäuse (120) gebildet ist, wobei das Verfahren umfasst:
einen Basismaterial-Herstellungsschritt (ST-110) zum Herstellen des oberen Gehäuses (110) und des unteren Gehäuses (120), die aus der Verkleidungs-Platte gebildet sind; **gekennzeichnet durch**
einen Flussmittelaufbringungsschritt (ST-120) zum Auftragen eines Flussmittels auf die Verbindungsflächen des oberen Gehäuses (110) und des unteren Gehäuses (120), so dass das Flussmittel auf die obere Klebeschicht (110b) und die untere Klebeschicht (120b) laminiert ist; und
einen thermischen Verbindungsschritt (ST-130) des Stapelns und Erwärmens des oberen Gehäuses (110) und des unteren Gehäuses (120), so dass die aufgebrachten Flussmittelschichten miteinander in Kontakt sind,
wobei das Flussmittel ein Aluminiumflussmittel auf Fluoridbasis umfasst, das mit Wasser gemischt wird und durch Mischen von 15 Gew.-% bis 40 Gew.-% eines Aluminiumflussmittels mit 60 Gew.-% bis 85 Gew.-% Wasser hergestellt wird,
wobei der Flussmittelaufbringungsschritt (ST-120) einen ersten Aufbringungsschritt (ST-121) des Aufbringens des Flussmittels auf die obere Klebeschicht (110b) des oberen Gehäuses (110) und die untere Klebeschicht (120b) des unteren Gehäuses (120) und einen zweiten Aufbringungsschritt (ST-123) zum erneuten Aufbringen des Flussmittels auf die aufgebrachte Flussmittelschicht umfasst, und
wobei das Verfahren ferner einen Flussmitteltrocknungsschritt (ST-122) zum Trocknen der in dem ersten Aufbringungsschritt (ST-121) aufgebrachten Flussmittelschicht umfasst, der zwischen dem ersten Aufbringungsschritt (ST-121) und dem zweiten Aufbringungsschritt (ST-123) durchgeführt wird, so dass eine größere Menge an Flussmitteln in unbeschichtete Abschnitte oder Poren eindringt, die in der zuvor aufgebrachten Flussmittelschicht erzeugt werden, wodurch die Flussmittelschicht mit einer dichteren Struktur gebildet wird.

2. Verfahren nach Anspruch 1, wobei die Laminierungsdicke des auf dem oberen Gehäuse (110) und dem unteren Gehäuse (120) gebildeten Flussmittels in einem Bereich von 30 *µ*m ~ 50*µ*m liegt.

3. Verfahren nach Anspruch 1 oder 2, wobei der Flussmitteltrocknungsschritt (ST-122) etwa 5 Minuten lang in einem Temperaturbereich von 100°C ~ 120°C durchgeführt wird.

4. Verfahren nach einem der Ansprüche 1 bis 3, wobei das Flussmittel ein Aluminiumflussmittel auf Fluoridbasis umfasst, das mit einem Bindemittel und Wasser gemischt und durch Mischen von 15 Gew.-% bis 40 Gew.-% eines Aluminiumflussmittels, 0 bis 5 Gew.-% eines Bindemittels und 60 Gew.-% bis 85 Gew.-% Wasser hergestellt wird.

5. Verfahren nach einem der Ansprüche 1 bis 4, wobei der thermische Verbindungsschritt (ST-130) einen primären Erhitzungsschritt (ST-131) des Erhitzens des oberen Gehäuses (110) bzw. des unteren Gehäuses (120), auf die das Flussmittel aufgebracht wird, und einen verbindenden Erhitzungsschritt (ST-133) des Stapelns und Erhitzens des oberen Gehäuses (110) und des unteren Gehäuses (120) beinhaltet, so dass die Flussmittelschichten des oberen Gehäuses (110) und des unteren Gehäuses (120), die primär erhitzt werden, miteinander in Kontakt sind.

6. Verfahren nach Anspruch 5, wobei der primäre Erhitzungsschritt (ST-131) für 5 Minuten oder länger im Temperaturbereich von 150°C ~ 200°C durchgeführt wird und das Bindemittel im primären Erhitzungsschritt (ST-131) geschmolzen wird.

7. Verfahren nach Anspruch 5 oder 6, wobei der verbindende Erhitzungsschritt (ST-133) bei einer Temperatur von 600 °C durchgeführt wird.

## Revendications

1. Procédé destiné à fabriquer un dispositif de refroidissement de batterie de voiture électrique (100) comportant une enveloppe supérieure (110) et une enveloppe inférieure (120) constituées d'une tôle plaquée, dans lequel l'enveloppe supérieure (110) comporte un corps d'enveloppe supérieure (110a) constitué d'aluminium et une couche adhésive supérieure (110b) stratifiée sur le corps d'enveloppe supérieure (110a), l'enveloppe inférieure (120) est couplée à l'enveloppe supérieure (110) et comporte un corps d'enveloppe inférieure (120a) constitué d'aluminium et une couche adhésive inférieure (120b) stratifiée sur le corps d'enveloppe inférieure (120a), et un espace d'accueil (150) est formé entre l'enveloppe supérieure (110) et l'enveloppe inférieure (120), le procédé comprenant :
une étape de préparation de matériau de base (ST-110) consistant à préparer l'enveloppe supérieure (110) et l'enveloppe inférieure (120), qui sont constituées de la tôle plaquée,
**caractérisé par**
une étape d'application de flux (ST-120) consistant à appliquer un flux sur des surfaces de soudage de l'enveloppe supérieure (110) et de l'enveloppe inférieure (120) de telle sorte que le flux soit stratifié sur la couche adhésive supérieure (110b) et la couche adhésive inférieure (120b) ; et
une étape de thermosoudage (ST-130) consistant à empiler et chauffer l'enveloppe supérieure (110) et l'enveloppe inférieure (120) de telle sorte que les couches de flux appliquées soient en contact l'une avec l'autre,
dans lequel le flux comporte un flux d'aluminium à base de fluorure, qui est mélangé avec de l'eau, et est préparé par mélange de 15 % en poids à 40 % en poids d'un flux d'aluminium avec 60 % en poids à 85 % en poids d'eau,
dans lequel l'étape d'application de flux (ST-120) comporte une première étape d'application (ST-121) consistant à appliquer le flux à la couche adhésive supérieure (110b) de l'enveloppe supérieure (110) et la couche adhésive inférieure (120b) de l'enveloppe inférieure (120), et une deuxième étape d'application (ST-123) pour appliquer à nouveau le flux à la couche de flux appliquée, et
le procédé comprenant en outre une étape de séchage de flux (ST-122) consistant à sécher la couche de flux appliquée dans la première étape d'application (ST-121), qui est effectuée entre la première étape d'application (ST-121) et la deuxième étape d'application (ST-123) de telle sorte qu'une quantité supérieure de flux pénètre à l'intérieur de parties non revêtues ou de pores générés dans la couche de flux qui est préalablement appliquée, formant ainsi la couche de flux ayant une structure plus dense.

2. Procédé de la revendication 1, dans lequel une épaisseur de stratification du flux formé sur l'enveloppe supérieure (110) et l'enveloppe inférieure (120) se situe dans une gamme de 30 µm ^{~} 50 µm.

3. Procédé de la revendication 1 ou 2, dans lequel l'étape de séchage de flux (ST-122) est effectuée pendant environ 5 minutes dans la gamme de température de 100 °C ^{~} 120 °C.

4. Procédé de l'une quelconque des revendications 1 à 3, dans lequel le flux comporte un flux d'aluminium à base de fluorure, qui est mélangé avec un liant et de l'eau, et est préparé par mélange de 15 % en poids à 40% en poids d'un flux d'aluminium, 0 à 5 % en poids d'un liant, et 60 % en poids à 85 % en poids d'eau.

5. Procédé de l'une quelconque des revendications 1 à 4, dans lequel l'étape de thermosoudage (ST-130) comporte une étape de chauffage initiale (ST-131) consistant à chauffer l'enveloppe supérieure (110) et l'enveloppe inférieure (120) auxquelles le flux est respectivement appliqué, et une étape de chauffage de soudage (ST-133) consistant à empiler et chauffer l'enveloppe supérieure (110) et l'enveloppe inférieure (120) de telle sorte que les couches de flux de l'enveloppe supérieure (110) et de l'enveloppe inférieure (120), qui sont initialement chauffées, soient en contact l'une avec l'autre.

6. Procédé de la revendication 5, dans lequel l'étape de chauffage initiale (ST-131) est effectuée pendant 5 minutes ou plus dans la gamme de température de 150 °C ^{~} 200 °C et le liant est fondu dans l'étape de chauffage initiale (ST-131).

7. Procédé de la revendication 5 ou 6, dans lequel l'étape de chauffage de soudage (ST-133) est effectuée à la température de 600 °C.
